**Europäisches Patentamt**

**European Patent Office**

**Office européen des brevets**

(19)

(11) Veröffentlichungsnummer: **0 395 627 B1**

(12) # EUROPÄISCHE PATENTSCHRIFT

(45) Veröffentlichungstag der Patentschrift: **15.02.95**

(51) Int. Cl.[6]: **B61B 12/00**, F16H 55/50

(21) Anmeldenummer: **90890121.8**

(22) Anmeldetag: **19.04.90**

(54) **Antriebsspeichenrad für Förderanlagen, insbesondere für Seilbahnen.**

(30) Priorität: **25.04.89 AT 995/89**

(43) Veröffentlichungstag der Anmeldung:
**31.10.90 Patentblatt 90/44**

(45) Bekanntmachung des Hinweises auf die
Patenterteilung:
**15.02.95 Patentblatt 95/07**

(84) Benannte Vertragsstaaten:
**AT BE CH DE DK ES FR GB GR IT LI LU NL SE**

(56) Entgegenhaltungen:
**DE-C- 139 049**
**FR-A- 891 283**
**GB-A- 149 67**
**US-A- 4 413 981**

(73) Patentinhaber: **Kothmayer, Herbert, Dipl.Ing.**
**Phil. Welserstrasse 5**
**A-6020 Innsbruck (AT)**

(72) Erfinder: **Kothmayer, Herbert, Dipl.Ing.**
**Phil. Welserstrasse 5**
**A-6020 Innsbruck (AT)**

(74) Vertreter: **Köhler-Pavlik, Johann, Dipl.-Ing.**
**Margaretenplatz 5**
**A-1050 Wien (AT)**

**Beschreibung**

Die Erfindung betrifft ein Seilantriebsspeichenrad für Förderanlagen, insbesondere für Seilbahnen, nach dem Oberbegriff des Patentanspruches 1.

Der Ausdruck "unabhängig voneinander verlaufend" hat für die Speichen der Antriebsscheiben die Bedeutung, daß die einzelnen Speichen nicht direkt, z.B. durch Überkreuzungspunkte, miteinander in Verbindung stehen und somit nur bei den Anschlußpunkten an Nabe oder Kranz gemeinsame Berührungspunkte auftreten können. Zwischen benachbarten Speichen örtlich eingesetzte Blechplatten werden nicht zu den direkten Verbindungen im obigen Sinn gerechnet. Die ersten Seilscheiben dieser Art waren dem Wagenrad nachgebaut. Von einer kleinen Nabe erstreckten sich meist acht radial angeordnete Speichen zum Kranz.

Durch die FR-A- 891 283 ist ein Rad bekannt geworden, welches für Karren oder Riemenscheiben gedacht ist. Riemenscheiben und Karren sind einem technischen Gebiet zuzuordnen, welches mit Antriebsscheiben für Förderanlagen unverwandt ist. Riemenscheiben unterscheiden sich von Antriebsscheiben für Förderanlagen dadurch, daß erstere hauptsächlich für konstante, letztere für schwankende Belastungen gebaut sind. Um eventuelle Belastungsschwankungen bei Riemenscheiben ausgleichen zu können, wird meistens eine Schwungmasse dazugeschaltet. Dadurch entsteht bei einer Riemenscheibe nie jenes hohe Antriebsmoment wie bei einer Antriebsscheibe für Förderanlagen. Die Riemenscheibe hat eine wesentlich höhere Geschwindigkeit und bewirkt die Kraftumsetzung durch mehrere Übersetzungen. Bei Riemenscheiben sind kontinuierliche Übersetzungssteuerungen. Dadurch ist an der Riemenscheibe die Geschwindigkeit sehr groß, die übertragende Kraft am Riemen jedoch klein. Bei einer Antriebsscheibe für Förderanlagen besteht das Problem darin, daß eine sehr große Kraft bei einer kleinen Umdrehungszahl überwunden werden muß. So ist z. B. bei einem Sessellift, wenn er anfährt, die Geschwindigkeit praktisch O, wobei aber die volle Kraftübertragung zu leisten ist. Demgegenüber beschleunigt die Riemenscheibe, wenn man sie einschaltet, sofort aus dem Stand, obwohl eigentlich die Kraft auf die Riemenscheibe praktisch O ist, d. h. die Riemenscheibe gibt kleine Kraftkomponenten auf die Schwungmasse und die Schwungmasse gibt dem belastenden Medium praktisch einen Kraftspeicher mit. Die FR-A-891 283 offenbart im Detail ein Rad für Karren, welches mit einem Gummi- oder Kunststoffreifen versehen ist und Speichen aufweist, die bei einer Ausführungsform aus einem Blechzuschnitt bestehen, bei dem die Speichen miteinander verbunden sind und am äußeren Ende eine Blechverbindung aufweisen. Bei einer anderen Ausführungsform sind die Enden der Speichen durch ein umlaufendes Band, z. B. aus Draht. In beiden Fällen sind die Enden der Speichen im Reifen eingegossen.

Durch die US-A-4 413 981 ist eine Antriebsscheibe für Textilfäden bekanntgeworden, bei welcher die Speichen nicht unabhängig an der Nabe bzw. am Kranz befestigt, sondern zu einem einstückigen Gebilde verbunden sind, welches an den Eckpunkten, einerseits an der Nabe und anderseits am Kranz, durch Bolzen angeschlossen ist. Hiebei ist der Raum zwischen Kranz und Nabe durch eine Kunststoffscheibe geschlossen, welche die Abtreibung des Eigengewichtes besorgt, während die Speichen nur zur Übertragung des Antriebsmomentes bestimmt sind. Weder die Kunststoffscheibe, noch das aus den Speichen bestehende Gebilde eignet sich für die Übertragung großer Kräfte oder von Biegemomenten.

Mit dem Bau von Anlagen höherer Kapazität und größerer Förderhöhe gestalteten sich die Speichenanschlüsse aufgrund der erhöhten Tangentiallast zunehmend aufwendiger, die Speichen selbst wurden dicker und dadurch nahm auch das Gewicht zu und die Wirtschaftlichkeit sank.

Die US-PS 1 694 350 beschreibt weiterführend eine Seilantriebsscheibe, bei der die direkt an der Nabe befestigten Speichen schräg zu den Scheibenradialen verlaufen. Die Anschlußpunkte der Speichen an Kranz bzw. Nabe sind jeweils äquidistant.

Eine weitere Alternativlösung wurde in Form der sogenannten Vollscheibe vorgeschlagen. Dabei ist das Verbindungsstück zwischen Nabe und Kranz als Vollfläche ausgeführt, die meist durch vorzugsweise acht radiale Steifen verstärkt ist. Die Vorteile zeigten sich in einer Vergrößerung der übertragbaren Antriebsleistung bei erhöhter Betriebsfestigkeit. Um den Nachteil des hohen Gewichts etwas zu mildern, sind im Bereich zwischen den Steifen im wesentlichen kreisförmige Löcher vorgesehen. Im Laufe der Zeit wurde dieser Scheibentyp in einigen Variationen abgewandelt, zum Beispiel ähnlich einer Sandwich-Konstruktion das Vollblech doppelstückig ausgeführt, das allgemeine Prinzip der Vollscheibe aber beibehalten.

Aufgabe der Erfindung ist die Schaffung eines für Förderanlagen, insbesondere Seilbahnen bestimmten Seilantriebsspeichenrades, das bei vorgegebenen Stabilitäts- und Betriebsanforderungen das Gewicht soweit wie möglich reduziert und große Biegemomente überträgt.

Diese Aufgabe wird bei einem Seilantriebsspeichenrad der eingangs erwähnten Bauart erfindungsgemäß durch die Maßnahme nach dem kennzeichnenden Teil des Patentanspruches 1 gelöst.

Weitere Vorteile ergeben sich durch die Maßnahmen der Unteransprüche. Vorteilhafte Ausführungsformen der Erfindung werden unter Bezugnahme auf die Zeichnungen in der folgenden Beschreibung näher erläutert.

Dabei zeigen

Fig. 1 ein erfindungsgemäßes Seilantriebsspeichenrad und

Fig. 2 eine vorteilhafte Ausführungsvariante davon.

Das erfindungsgemäße Seilantriebsspeichenrad weist eine Speichenanordnung aus Speichenpaaren auf, wobei der Abstand der Anschlußpunkte der jeweils ein Speichenpaar bildenden Speichen 3, 3' an der Nabe 1 größer als am Kranz 2 ist. Dazu ist zumindest eine Speiche in jedem Speichenpaar in Radebene gegenüber einer gedachten vom zugehörigen Anschlußpunkt am Kranz 2 ausgehenden radialen Speiche verschwenkt. Durch diese Bauweise wird das Antriebsmoment in ein Kräftepaar zerlegt, dessen eine Komponente in Umfangsrichtung des Kranzes 2 wirkt und Antrieb bzw. Bremsung hervorruft. Die radiale Komponente jeder Speiche 3 wird über die zugehörige Partnerspeiche 3' aufgefangen und wieder zur Nabe 1 abgeleitet. Ein solches System ist unter Tangentiallast, wie sie durch Antreiben oder Bremsen eines Seiles entsteht, praktisch momentenfrei.

Besonders günstig ist dabei eine Speichenanordnung, bei welcher die Anschlußpunkte der jeweils ein Speichenpaar bildenden Speichen 3, 3' am Kranz 2 möglichst nahe zusammengeführt sind, vorzugsweise bis sie einander berühren.

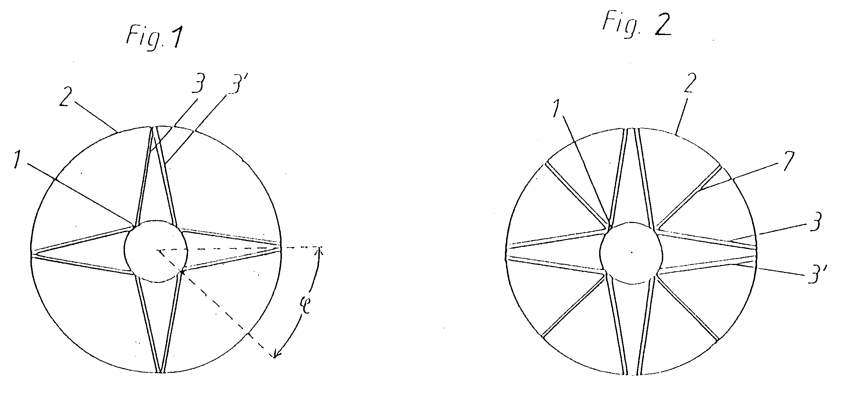

Eine weitere vorteilhafte Ausführungsform sieht vor, daß beide Speichen, d.h. 3 und 3', der Speichenpaare gegenüber gedachten, von den zugehörigen Anschlußpunkten am Kranz 2 ausgehenden Radialen um unterschiedliche Winkel, vorzugsweise in entgegengesetzer Richtung, verschwenkt sind. Als besonders günstige Form hat sich die in Fig. 1 dargestellte weitere Variante erwiesen. Diese ist dadurch gekennzeichnet, daß die Winkelhalbierende zwischen den Speichen 3, 3' in den jeweiligen Speichenpaaren genau radial verläuft und vorzugsweise die einzelnen Speichen in Speichenebene gegenüber vom selben Punkt an der Nabe ausgehenden, gedachten radialen Speichen um Winkel zwischen 30° und 80°, vorteilhaft um etwa 60°, verschwenkt sind.

Die gewichtsmäßig optimale Speichenanordnung ergibt sich als Kompromiß zwischen einer kürzestmöglichen Speichenlänge einerseits und einer möglichst in Speichenlängsrichtung zu übertragenden Kraftkomponente zum Antrieb bzw. zur Bremsung des Rades. Die erste Bedingung wurde am günstigsten durch das Radialspeichenrad erfüllt, hätte aber die in der Einleitung erwähnten Nachteile der hohen notwendigen Speichenquerschnitte. Die zweite Anforderung würde im Extremfall zu genau tangential zur Nabe angeordneten Speichen führen, was jedoch die Speichengesamtlänge und damit das Gewicht beträchtlich erhöhen würde und außerdem durch notwendige Überkreuzungspunkte zwischen den Speichen fertigungstechnisch aufwendiger würde.

Die Vermeidung von Überkreuzungspunkten läßt den Speichen auch genügend Spielraum, um nicht durch Zwangsbelastungen, wie z.B. Torsionsmomente in den Speichen oder Biegemomente mit Drehachse normal zur Radebene, zu hohe Schnittkräfte zu wecken.

Die optimale Speichenanordnung läßt sich mittels einer einfachen Formel ermitteln, die für ein gegebenes Verhältnis von Kranzradius $R_K$ und Nabenradius $R_N$ den optimalen Speichenanstellwinkel $\phi$ (siehe dazu auch Fig.1) zu

$$\varphi_{opt} = \text{acos} \cfrac{2}{\cfrac{R_K}{R_N} + \cfrac{R_N}{R_K}}$$

ergibt.

Das Gewicht der Speichen ist schließlich noch vom Material und Querschnitt abhängig, die entsprechend den zu erwartenden Belastungen gewählt werden müssen.

Die obige Formel ergibt für Seilantriebsspeichenräder, deren Durchmesser zwischen etwa 2,5 m und 5,0 m liegt, und die dabei gebräuchliche Maße für Kranz- bzw. Nabenradius aufweisen, einen Winkel zu etwa 58°, was bei symmetrischer Anordnung drei Speichenpaaren entspricht. Wegen der günstigeren Kranzabstützung und einfacheren Nabenkonstruktion wird allerdings vorteilhafterweise eine Konstruktion mit 4 Speichenpaaren gewählt, die nur etwa 4 % Mehrgewicht gegenüber der optimalen Variante aufweist, jedoch bessere Bedingungen für den Anschluß der Speichen an der Nabe bietet. Der Winkel ist hierfür 45° und der Winkel der Speichen gegenüber der radialen Richtung beträgt ca. 60°.

Eine vorteilhafte Ausführungsvariante, wie sie in Fig. 2 dargestellt ist, sieht zwischen den Speichenpaaren 3, 3' mindestens je eine radiale Stützspeiche 7 vor. Diese hat keine Antriebsfunktion, sondern stützt lediglich den Kranz auf der Nabe ab und erlaubt eine zusätzliche Reduktion des Kranzvolumens.

Die Speichen sind direkt, d.h. ohne radiale Hilfsspeichen an der Nabe 1 als auch am Kranz 2 befestigt.

Der Querschnitt für die Speichen 3, 3' und 7 muß ausreichende Biegefestigkeit gegenüber Belastungen normal zur Radebene aufweisen, wobei gleichzeitig der Querschnitt so gering wie möglich zu halten ist.

Diese Bedingungen werden in optimaler Weise durch eine bestimmte Art von Walzprofilen, sogenannten I-Profilen, erfüllt, welche auch in einfacher Weise an Nabe und Kranz angeschlossen werden können.

Die Orientierung des Profiles erfolgt so, daß senkrecht zur Scheibenebene eine hohe Biegefestigkeit erzielt wird, was im besonderen für horizontal liegende Scheiben bzw. Scheiben mit hohen Querbeanspruchungen vorteilhaft ist, während in Scheibenebene geringe Biegefestigkeit wegen der weiter oben erwähnten Zwangsbelastungen nicht nachteilig ist.

Im Prinzip ist allerdings jedes Speichenprofil verwendbar, soferne es nur die zuvor aufgestellten Bedingungen erfüllt. Dies schließt etwa Formrohre mit ovalem oder rechteckigem Querschnitt ein, deren größerer Durchmesser im wesentlichen normal zur Scheibenebene steht, wogegen etwa kreisrunde oder quadratische Querschnitte schon wieder eine unnötige Volumens- und damit Gewichtsvermehrung bedeuten. Möglich ist auch der Zusammenbau des Speichenquerschnittes aus Einzelquerschnitten, die, in Sandwichbauweise angeordnet, ähnliche Biegeeigenschaften ergeben, wie sie etwa bei I-Profilen vorhanden sind.

Abschließend kann gesagt werden, daß das Gewicht des erfindungsgemäßen Seilantriebsspeichenrades bei nur etwa 30 - 40% einer Vollscheibe bzw. 60 - 70% eines herkömmlichen Seilantriebsspeichenrades vergleichbarer Antriebsleistung liegt. Der Fertigungsaufwand konnte gegenüber beiden Fällen, unter besonderer Berücksichtigung von Schweißlängen und Glühen der Scheibe, auf ca. 30 - 40 % reduziert werden, und schließlich sind noch die günstigen Eigenschaften bezüglich des Transportes zu berücksichtigen.

**Patentansprüche**

1. Seilantriebsspeichenrad für Förderanlagen, insbesondere Seilbahnen, bestehend aus Nabe, Kranz und einer dazwischenliegenden Speichenanordnung aus zumindest zwei die Übertragung der Antriebsmomente und des Eigengewichtes besorgende Speichenpaaren aus Walzprofilen, wobei die einzelnen Speichen unabhängig voneinander verlaufen und einerseits auf der Nabe und andererseits am Kranz direkt befestigt sind und die Nabe mit dem Kranz als tragendes Element ausschließlich verbinden, dadurch gekennzeichnet, daß der Abstand der Anschlußpunkte der jeweils ein Speichenpaar bildenden Speichen (3, 3') an der Nabe (1) größer ist als am Kranz (2).

2. Seilantriebsspeichenrad nach Anspruch 1, dadurch gekennzeichnet, daß die Speichen (3, 3') eines Speichenpaares gegenüber gedachten von den zugehörigen Anschlußpunkten am Kranz (2) ausgehenden Radialen um unterschiedliche Winkel, vorzugsweise in entgegengesetzter Richtung verschwenkt sind.

3. Seilantriebsspeichenrad nach Anspruch 1, dadurch gekennzeichnet, daß die Winkelhalbierende des durch ein Speichenpaar (3, 3') gebildeten Winkels radial verläuft.

4. Seilantriebsspeichenrad nach Anspruch 1, dadurch gekennzeichnet, daß zwischen je zwei Speichenpaaren zumindest je eine radiale Stützspeiche (7) vorgesehen ist.

5. Seilantriebsspeichenrad nach Anspruch 4, dadurch gekennzeichnet, daß die radialen Stützspeichen (7) aus demselben Profil wie die Speichen (3, 3') angefertigt sind.

**Claims**

1. A cable-drive spoked wheel for conveyor systems, in particular cableways, comprising a hub, a wheel rim and an interposed arrangement of spokes comprising at least two pairs of spokes of rolled sections transmitting the driving torque and the dead weight, wherein the individual spokes extend independently of each other and are directly fastened at one end to the hub and at the other to the wheel rim and only connect the hub to the wheel rim in the form of a load-bearing element, characterised in that the distance of the junction points of the spokes (3, 3') forming a pair of spokes in each case is larger on the hub (1) than on the wheel rim (2).

2. A cable-drive spoked wheel according to Claim 1, characterised in that the spokes (3, 3') of a pair of spokes are tilted at various angles, preferably in an opposite direction, in relation to imaginary radial elements coming out from the associated junction points on the wheel rim (2).

3. A cable-drive spoked wheel according to Claim 1, characterised in that the median line of the angle formed by a pair of spokes (3, 3') extends radially.

4. A cable-drive spoked wheel according to Claim 1, characterised in that at least one radial support spoke (7) is provided for each two pairs of spokes.

5. A cable-drive spoked wheel according to Claim 4, characterised in that the radial support spokes (7) are produced from the same section as the spokes (3, 3').

**Revendications**

1. Roue à rayons de commande par câble pour des installations de transport, en particulier des téléphériques, se composant d'un moyeu, d'une jante et d'un ensemble de rayons placé entre eux comprenant au moins deux paires de rayons qui sont réalisés à partir de profilés laminés et qui assurent le transfert des couples moteurs et du poids mort, les rayons, indépendants les uns des autres, étant chacun fixés directement, d'un côté, au moyeu et, de l'autre, à la jante en établissant ainsi la liaison entre le moyeu et la jante exclusivement en tant qu'organe porteur, caractérisée en ce que la distance des points de raccordement des rayons (3, 3') formant respectivement une paire est plus grande au niveau du moyeu (1) qu'au niveau de la jante (2).

2. Roue à rayons de commande par câble selon la revendication 1, caractérisée en ce que les rayons (3, 3') d'une paire de rayons sont basculés de préférence en sens inverse par rapport à des radiales imaginaires partant des points de raccordement respectifs sur la jante (2) et, ce, à des angles différents.

3. Roue à rayons de commande par câble selon la revendication 1, caractérisée en ce que la bissectrice de l'angle formé par une paire de rayons (3, 3') s'étend radialement.

4. Roue à rayons de commande par câble selon la revendication 1, caractérisée en ce qu'il est prévu, entre deux paires de rayons (3, 3'), au moins un rayon radial de support (7).

5. Roue à rayons de commande par câble selon la revendication 1, caractérisée en ce que les rayons de support radiaux (7) sont fabriqués dans le même profilé que les rayons (3, 3').

EP 0 395 627 B1

Fig. 2

Fig. 1

6